(19) Europäisches Patentamt
European Patent Office
Office européen des brevets

(11) **EP 2 646 710 B1**

(12) **EUROPÄISCHE PATENTSCHRIFT**

(45) Veröffentlichungstag und Bekanntmachung des Hinweises auf die Patenterteilung:
**11.03.2015 Patentblatt 2015/11**

(21) Anmeldenummer: **11776208.8**

(22) Anmeldetag: **31.10.2011**

(51) Int Cl.:
***F16H 25/22*** *(2006.01)*

(86) Internationale Anmeldenummer:
**PCT/EP2011/069122**

(87) Internationale Veröffentlichungsnummer:
**WO 2012/072353 (07.06.2012 Gazette 2012/23)**

(54) **UMLENKLEISTE FÜR EINEN KUGELGEWINDETRIEB UND KUGELGEWINDETRIEB MIT UMLENKLEISTE**

DEFLECTING STRIP FOR A BALL-SCREW DRIVE AND BALL-SCREW DRIVE WITH A DEFLECTING STRIP

ÉLÉMENT DE RETOUR DE BILLES POUR VIS À BILLES ET VIS À BILLES DOTÉE D'UN ÉLÉMENT DE RETOUR DE BILLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2010 DE 102010053343**

(43) Veröffentlichungstag der Anmeldung:
**09.10.2013 Patentblatt 2013/41**

(73) Patentinhaber: **August Steinmeyer GmbH & Co. KG**
**72458 Albstadt (DE)**

(72) Erfinder: **BECK, Alexander**
**72459 Albstadt (DE)**

(74) Vertreter: **DREISS Patentanwälte PartG mbB**
**Patentanwälte**
**Gerokstrasse 1**
**70188 Stuttgart (DE)**

(56) Entgegenhaltungen:
**EP-A1- 1 914 447       DE-A1-102008 058 888**
**GB-A- 2 361 045        US-A- 5 388 475**
**US-A1- 2007 295 132**

**Beschreibung**

Die Erfindung betrifft eine Umlenkleiste und einen Kugelgewindetrieb nach den nebengeordneten Ansprüchen 1 und 11. Kugelgewindetriebe werden im Maschinenbau bei einer Vielzahl von Anwendungen mit Erfolg eingesetzt. Sie haben die früher vorherrschenden Trapezgewindespindeln weitestgehend verdrängt, da sie unter anderem hinsichtlich Wirkungsgrad, Antriebsleistungsbedarf, Präzision und Verschleißfestigkeit erhebliche Vorteile bieten.

Die Hauptkomponenten eines Kugelgewindetriebs sind die Kugelgewindespindel und eine Kugelgewindemutter. Die Kugelgewindespindel und die Kugelgewindemutter bilden zusammen einen Kugellaufkanal in dem sich eine Vielzahl von Kugeln befindet, die auf der Kugelgewindespindel und der Kugelgewindemutter abwälzen. Die Kugeln stellen dabei eine formschlüssige Verbindung zwischen der Kugelgewindespindel und der Kugelgewindemutter her, sodass beispielsweise durch Drehen der Kugelgewindespindel der Kugelgewindemutter eine Linearbewegung aufgeprägt wird. Dadurch, dass die Kugelgewindemutter und die Kugelgewindespindel nicht direkt, sondern über die in dem Kugellaufkanal befindlichen Kugeln miteinander in Kontakt stehen, sind der Wirkungsgrad und die Präzision von Kugelgewindetrieben sehr hoch.

Da die Kugeln in dem Kugellaufkanal eine Wälzbewegung ausführen, rollen sie durch den Kugellaufkanal, wenn die Kugelgewindespindel relativ zu der Kugelgewindemutter gedreht wird. Dies bedeutet, dass die Kugeln in den Kugellaufkanal zurückgeführt werden müssen, um ein Entleeren des Kugellaufkanals zu verhindern. Im Stand der Technik sind verschiedene Möglichkeiten der Rückführung von Kugeln beschrieben.

Die Erfindung betrifft eine Rückführung der Kugeln mittels einer sogenannten Umlenkleiste. Diese Umlenkleiste hat die Aufgabe, die in dem Kugellaufkanal befindlichen Kugeln am Ende einer Umdrehung wieder in den gleichen Gewindegang zu befördern. Dies bedeutet, dass die Kugeln eines Kugelgewindetriebs immer in dem gleichen Gewindegang sind und am Ende dieses Gewindegangs, das heißt nach einer Drehung von maximal 360°, über einen Umlenkkanal in der Umlenkleiste wieder in den gleichen Gewindegang eingeführt werden.

Dies bedeutet auch, dass die Zahl der Umlenkkanäle in der Umlenkleiste gleich der Zahl der Gewindegänge ist, die von der Kugelgewindemutter überdeckt werden. Dazu weisen die relativ kurzen Umlenkkanäle einen Versatz in axialer Richtung auf, der in etwa der Steigung eines Gewindegangs des Kugelgewindetriebs entspricht. Beispielhaft für eine solche Bauart eines Kugelgewindetriebs sei auf die EP 0 643 241 A1 und die EP 0 113 014 verwiesen.

Die oben beschriebene Rückführung der Kugeln mittels einer Umlenkleiste ist beispielsweise aus der Figur 1 der EP 0 643 241 A1, auf die hiermit Bezug genommen wird, gut zu erkennen. Im rechten Abschnitt der Figur 1 ist die Kugelgewindespindel dargestellt und es ist deutlich, dass in dieser Kugelgewindespindel eine Längsnut ausgearbeitet ist, die zur Aufnahme der Umlenkleiste dient. Die GB 2 361 045 A zeigt eine Umlenkleiste für einen Kugelgewindetrieb gemäß dem Oberbegriff des Anspruchs 1.

Die Umlenkleiste ist aus herstellungs- und montagetechnischen Gründen als separates Bauteil ausgeführt und wird in die Längsnut der Kugelgewindemutter eingeschoben und dort fixiert.

Damit die Umlenkleiste ihre Aufgabe, nämlich die Kugeln vom Ende eines Gewindegangs wieder an dessen Anfang zurückzubefördern, erfüllen kann, sind an einer der Kugelgewindespindel abgewandten Seite, d. h. einer Außenseite der Umlenkleiste mehrere Umlenkkanäle vorgesehen, die den Rücktransport der Kugeln bewerkstelligen. Diese Umlenkkanäle müssen bezogen auf die Längsachse der Kugelgewindespindel einen Versatz aufweisen, der in erster Näherung der Steigung der Kugelgewindespindel entspricht.

Bei herkömmlichen Umlenkleisten kommt es bei bestimmten Hauptabmessungen des Kugelgewindetriebs, nämlich, Spindeldurchmesser, Steigung und Kugeldurchmesser, dazu, dass sich die Kugeln benachbarter Umlenkkanäle gegenseitig berühren und blockieren. Um dies zu vermeiden wird dann nur jeder zweite Umlenkkanale für die Rückführung von Kugeln genutzt.

In Folge reduziert sich die Zahl der in einer Kugelgewindemutter befindlichen Kugeln auf etwa die Hälfte, was mit einer etwa gleich großen Verringerung der Belastbarkeit des gesamten Kugelgewindespindeltriebs auswirkt.

Der Erfindung liegt die Aufgabe zu Grunde, eine Umlenkleiste für einen Kugelgewindetrieb bereitzustellen, die diese Nachteile vermeidet und einen Kugelgewindetrieb mit erhöhter Belastbarkeit und kompakter Bauweise bereit zu stellen.

Diese Aufgabe wird erfindungsgemäß durch eine Umlenkleiste für einen Kugelgewindetrieb, wobei die Umlenkleiste mehrere Umlenkkanäle aufweist, und wobei die Umlenkkanäle ein erstes Ende, ein zweites Ende und eine Längsachse aufweisen, dadurch gelöst, dass ein Abstand S der Längsachsen zweier Umlenkkanäle konstant ist.

Durch die erfindungsgemäße Anordnung der Umlenkkanäle relativ zueinander und deren Ausgestaltung ist es möglich, "Engpässe" für die Kugeln zwischen benachbarten Umlenkkanälen zu vermeiden. Damit ist es möglich, dass auch bei besonderen Konstellationen der Hauptabmessungen eines Kugelgewindetriebs für jeden Gewindegang ein Umlenkkanal in der Umlenkleiste zur Rückführung von Kugeln zur Verfügung steht. In Folge dessen können alle Gewindegänge der Kugelgewindemutter mit Kugeln befüllt werden, so dass die Belastbarkeit und Tragfähigkeit des erfindungsgemäßen Kugelgewindetriebs maximiert wird.

In aller Regel ist es so, dass das erste Ende und das zweite Ende jedes Umlenkkanals einen Versatz aufweist, der durch eine erste Richtungsänderung und eine daran anschließende zweite komplementäre Richtungsänderung der Umlenkkanäle gebildet wird. Diese Richtungsänderungen können als Knick oder als kreisbogenförmige Ausgestaltung der Längsachse der Umlenkkanäle ausgebildet sein.

Umgangssprachlich ausgedrückt wird der Versatz dadurch erreicht, dass die Längsachse der Umlenkkanäle beispielsweise zuerst um einen vorgegebenen Winkel von zum Beispiel 30° nach links abknickt und unmittelbar danach wieder um den gleichen Winkel nach rechts abknickt. Dadurch wird der gewünschte Versatz in der Art einer Parallelverschiebung erreicht. Wenn ausreichend Platz in der Umlenkleiste zur Verfügung steht, kann auch an Stelle eines Knicks der Längsachse eine erste Richtungsänderung und daran anschließende und/oder die zweite komplementäre Richtungsänderung durch einen Kreisbogen der Längsachse erreicht werden. Dadurch wird eine weniger abrupte Umlenkung der Kugeln erreicht, was manchmal Vorteile bietet.

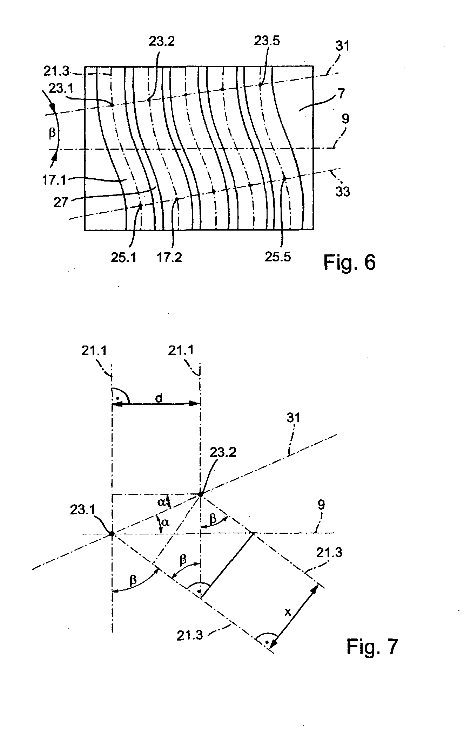

Erfindungsgemäß ist nun vorgesehen, dass eine Verbindungslinie zwischen den ersten Richtungsänderungen der erfindungsgemäßen Umlenkkanäle einer Umlenkleiste nicht parallel zu einer Längsachse der Kugelgewindespindel, sondern verdreht zu der Längsachse der Kugelgewindespindel verlaufen. Verdreht meint im Zusammenhang mit der beanspruchten Erfindung, dass diese Verbindungslinie eine schraubenförmig gekrümmte Linie ist, die koaxial zur Längsachse der Kugelgewindespindel verläuft. Die Steigung dieser Schraubenlinie ist sehr viel größer als die Steigung der Kugelgewindespindeln. In den Figur 6 ist eine Abwicklung dieser an sich gekrümmten Schraubenlinie als gerade Linie dargestellt.

In gleicher Weise können auch die zweiten Richtungsänderungen der Umlenkkanäle einer erfindungsgemäßen Umlenkleiste relativ zueinander angeordnet werden.

Durch die erfindungsgemäße relative Anordnung der ersten Richtungsänderungen und/oder der zweiten Richtungsänderungen der Umlenkkanäle können Engpässe für die in den Umlenkkanälen befindlichen Kugeln, die sich vor allem im Übergangsbereich zwischen der ersten Richtungsänderung und der zweiten Richtungsänderung einstellen, vollständig eliminiert werden. In Folge dessen können alle Gewindegänge des erfindungsgemäßen Kugelgewindetriebs im Bereich der Kugelgewindemutter mit Kugeln befüllt werden, so dass die Dicke einer Rippe, welche zwei benachbarte Umlenkkanäle voneinander abgrenzt, über die gesamte Länge der Umlenkkanäle konstant ist, so dass auch hier ein minimaler Platzbedarf bei gleichzeitig maximaler Festigkeit und Funktionssicherheit erreicht wird.

Die erfindungsgemäße schraubenlinienförmig verdrehte Anordnung der ersten Richtungsänderungen und/oder der zweiten Richtungsänderungen der verschiedenen Umlenkkanäle einer erfindungsgemäßen Umlenkleiste hat darüber hinaus den Vorteil, dass die Herstellungskosten gleich hoch sind wie die einer herkömmlichen Umlenkleiste.

Besonders vorteilhaft ist auch, dass der Einsatz der erfindungsgemäßen Umlenkleiste in einem Kugelgewindetrieb keine Änderungen der Hauptbaugruppen, nämlich der Kugelgewindespindel und der Kugelgewindemutter erfordert. Es ist also möglich, die erfindungsgemäße Umlenkleiste ohne großen Aufwand in der Serienfertigung einzuführen.

Es ist auch denkbar, bereits gefertigte Kugelgewindetriebe, die mit herkömmlichen Umlenkleisten ausgestattet sind bei denen nur jeder zweite Umlenkkanal mit Kugeln gefüllt ist, durch erfindungsgemäße Umlenkleisten aufzurüsten und damit auch die Belastbarkeit solchermaßen aufgerüsteten Kugelgewindespindeln durch das Einfüllen von Kugeln in allen Gewindegängen der Kugelgewindemutter zu verdoppeln. Auch hierzu sind keine Änderungen am Kugelgewindetrieb mit Ausnahme des Auswechselns der Umlenkleisten und der Neubefüllung der Kugelgewindemutter mit Kugeln erforderlich.

Die erfindungsgemäße Aufgabe wird auch bei einem Kugelgewindetrieb umfassend eine Kugelgewindespindel und eine Kugelgewindemutter, wobei die Kugelgewindespindel und die Kugelgewindemutter einen Kugellaufkanal mit mehreren Wendeln begrenzen in dem Kugeln angeordnet sind, die sich auf der Kugelgewindespindel und der Kugelgewindemutter abwälzen, wenn die Kugelgewindemutter relativ zu der Kugelgewindespindel verdreht wird, wobei in der Kugelgewindemutter eine Umlenkleiste angeordnet ist, welche die Kugeln in den gleichen Gewindegang umlenkt bzw. zurückführt, dadurch gelöst, dass eine erfindungsgemäße Umlenkleiste eingesetzt wird.

Dieser Kugelgewindetrieb weist alle Vorteile, die durch den Einsatz einer erfindungsgemäßen Umlenkleiste realisiert werden können, auf, so dass um Wiederholungen zu vermeiden auf das zuvor im Zusammenhang mit der Umlenkleiste gesagte verwiesen wird.

Weitere Vorteile und vorteilhafte Ausgestaltungen der Erfindung sind den nachfolgenden Zeichnung, deren Beschreibung und den Patentansprüchen entnehmbar. Alle der Zeichnung, deren Beschreibung und den Patentansprüchen beschriebenen und offenbarten Merkmale können, ohne dass gesondert darauf hingewiesen wird, einzeln oder in Kombination miteinander erfindungswesentlich sein.

Es zeigen:

Figur 1 eine Explosionsdarstellung eines erfindungsgemäßen Kugelgewindetriebs,
Figur 2 eine erfindungsgemäße Kugelgewindemutter mit erfindungsgemäßer Umlenkleiste im Schnitt,
Figur 3 eine Umlenkleiste nach dem Stand der Technik,
Figur 4 eine freigeschnittene Kugelgewindemutter mit Umlenkleiste,
Figur 5 die geometrischen Verhältnisse bei einer Umlenkleiste mit herkömmlich gestalteten Umlenkkanälen,

Figur 6 die geometrischen Verhältnisse bei einer erfindungsgemäßen Umlenkleiste,

Figur 7 die erfindungsgemäße Anordnung der Längsachsen von zwei benachbarten Umlenkkanälen und deren geometrische Relationen

Beschreibung der Ausführungsbeispiele

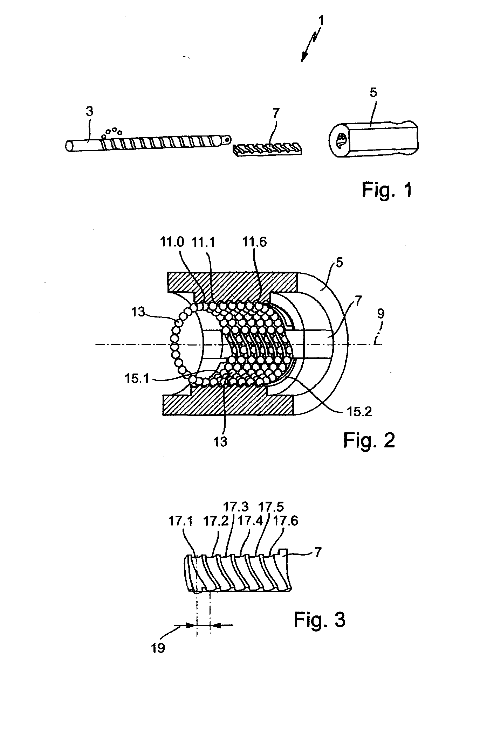

Die Figur 1 zeigt in einer Explosionsdarstellung die wichtigsten Bauelemente eines in seiner Gesamtheit als mit dem Bezugszeichen 1 versehenen Kugelgewindetriebs. Es sind dies, eine Kugelgewindespindel 3, eine Kugelgewindemutter 5 und eine Umlenkleiste 7. Die Kugeln, welche in den Kugellaufkanal, der durch die Kugelgewindespindel 3 und die Kugelgewindemutter 5 in montiertem Zustand gebildet wird, sind größtenteils nicht dargestellt. Zur Veranschaulichung sind lediglich am linken Ende der Kugelgewindespindel 3 einige Kugeln ohne Bezugszeichen angedeutet.

In Figur 2 ist eine Kugelgewindemutter 5 mit montierter Umlenkleiste 7 im Längsschnitt dargestellt. Eine Längsachse der Kugelgewindemutter 5, die auch mit der Längsachse der Kugelgewindespindel 3 (nicht dargestellt in Figur 2) zusammenfällt, ist als strichpunktierte Linie mit dem Bezugszeichen 9 angedeutet.

Die in der Figur 2 dargestellte Kugelgewindemutter 5 umfasst sechs Gewindegänge 11.1 bis 11.6, die vollständig mit Kugeln 13 gefüllt sind. Aus Gründen der Übersichtlichkeit sind nicht alle Gewindegänge 11 mit Bezugszeichen versehen. Entsprechendes gilt auch für die Kugeln 13.

Zum Verständnis der weiter unten detailliert beschriebenen erfindungsgemäßen Umlenkleiste 7 ist es wichtig darauf hinzuweisen, dass ein Gewindegang im Zusammenhang mit der beanspruchten Erfindung einen Umfangswinkel von etwa 360° umfasst, sodass der erste Gewindegang 11.1 an der mit 11.0 bezeichneten Stelle beginnt und bei 11.1 endet.

Wie sich aus dem Schnitt gemäß Figur 2 ergibt, dient die Umlenkleiste 7 dazu, die Kugeln 13 wieder an den Anfang eines Gewindegangs 11 zurückzubewegen, wenn sich die Kugeln 13 aufgrund einer Drehbewegung der nicht dargestellten Kugelgewindespindel 3 an das Ende eines Gewindegangs 11 gelangt sind. Dies gilt für beide Drehrichtungen

Da die Funktionsweise solcher Kugelgewindespindeln seit langem bekannt sind, wird auf eine detaillierte Beschreibung verzichtet. Erlaubt sei an dieser Stelle noch der Hinweis, dass am Anfang und am Ende der Kugelgewindemutter 5 jeweils ein gebogenes und keilförmiges Endstück 15.1 und 15.2 ausgebildet ist, welches den in der Kugelgewindemutter 5 vorhandenen Kugellaufkanal abschließen, so dass die Kugeln 13 nicht am Vorderrand oder am hinteren Ende aus der Kugelgewindemutter 5 herausfallen können.

Damit die Kugeln, wenn sie sich auf den Gewindegängen 11.1 bis 11.6 der Kugelgewindemutter 5 abwälzen, nicht an diese Endstücke 15.1 oder 15.2 anlaufen und dadurch der Kugelgewindetrieb blockiert wird, sind in der Umlenkleiste 7, die in Figur 3 gesondert und gewissermaßen axial von außen dargestellt ist, Umlenkkanäle 17.1 bis 17.6 ausgearbeitet.

Die Umlenkkanäle 17 weisen einen Versatz 19 auf, der exemplarisch für den ersten Umlenkkanal 17.1 in Figur 3 eingezeichnet ist. Dieser Versatz ist so bemessen, dass er in erster Näherung der Steigung der Gewindegänge 11 der Kugelgewindemutter 5 entspricht. Aufgrund der Baubreite der Umlenkleiste 7 und der tangentialen Erstreckung der Umlenkkanäle 17 ist der Versatz 19 etwas kleiner als die Steigung eines Gewindegangs 11.

Die Umlenkkanäle 17 nehmen die Kugeln (nicht dargestellt in Figur 3) aus der Kugelgewindespindel 3 heraus, so dass der Formschluss zwischen den Kugeln, die sich in den Umlenkkanälen 17 befinden, und der Kugelgewindespindel 3 aufgehoben wird. Deshalb ist es möglich, mit Hilfe der Umlenkkanäle 17 die Kugeln, ohne dass es zu einem Klemmen oder einer Blockierung des Kugelgewindetriebs 1 kommt, entgegen der Steigung der Kugelgewindespindel 3 wieder zurück an den Anfang eines Gewindegangs 11 zu bewegen.

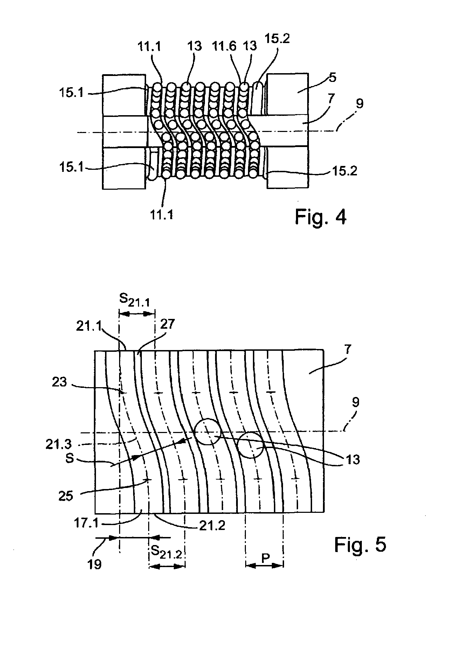

Anhand der Figur 4 wird das Gesagte nochmals verdeutlicht. Figur 4 zeigt eine teilweise freigeschnittene Kugelgewindemutter 5 und eine Umlenkleiste 7 mit den Umlenkkanälen 17.1 bis 17.6. In Fig. 4 ist die Kugelgewindespindel 3 nicht gezeichnet, sondern lediglich die Längsachse 9 der Kugelgewindespindel 3 dargestellt. Sehr gut sind in dieser Darstellung die Endstücke 15.1 und 15.2 zu erkennen.

In Figur 4 sind die Gewindegänge 11.1 bis 11.6 gut zu erkennen. Zur Veranschaulichung ist in der oberen Hälfte und in der unteren Hälfte der freigeschnittenen Kugelgewindemutter 5 der Gewindegang 11.1 mit Bezugszeichen versehen. Es wird auch deutlich, dass der zugehörige Umlenkkanal 17.1 der Umlenkleiste 7 dazu dient, die Kugeln 13 so umzulenken, dass sie wieder in den gleichen Gewindegang 11.1 zurückgeführt werden. Entsprechendes gilt auch für die anderen Gewindegänge 11.2-11.6 und die zugehörigen Umlenkkanäle 17.1-17.6.

Aus der Figur 4 wird auch deutlich, dass die Umlenkleiste 7 in axialer Richtung über die Gewindegänge 11.1 bis 11.6 hinausragen kann. In dem axial überstehenden Bereich kann sie mit der Kugelgewindemutter 5 so verbunden werden, dass eine Verschiebung in axialer Richtung nicht möglich ist.

In Figur 5 sind 5 Umlenkkanäle 17.1-17.6 einer herkömmlichen Umlenkleiste 7 vergrößert dargestellt. Die Umlenkkanäle 17 weisen, wie bereits im Zusammenhang mit der Figur 3 erwähnt einen Versatz 19 auf. Dieser Versatz 19 wird dadurch erreicht, dass eine Längsachse 21 des Umlenkkanals 17 eine erste Richtungsänderung 23 und eine zweite Richtungsänderung 25 erfährt und eine entgegengesetzte oder komplementäre zweite Richtungsänderung 25 erfährt.

Die erste Richtungsänderung und die zweite Richtungsänderung 23 sind vom Betrag her gleich groß, so dass die Abschnitte 21.1 der Längsachse und 21.2 der Längsachse 21 eines Umlenkkanals 17 parallel zueinander verlaufen. Zwischen den Richtungsänderungen 23 und 25 ist ein gerades Verbindungsstück 21.3 vorhanden, dessen Länge zusammen mit der Winkeländerung im Bereich der Richtungsänderungen 23 und 25 den Versatz 19 bestimmen.

Zwischen den benachbarten Umlenkkanälen 17.1 und 17.2 beispielsweise ist eine Rippe 27 ausgebildet, welche die Kugeln 13 benachbarter Umlenkkanäle 17 voneinander trennt. Im Bereich des Verbindungsabschnitts 21.3 ist die Rippe 27 weniger dick als im Bereich der Abschnitte 21.1 und 21.2 der Umlenkkanäle 17. Dies liegt an der Schrägstellung des Verbindungsabschnitts 21.3 in Verbindung mit der Tatsache, dass die Knickpunkte 23 und 25 die Umlenkkanäle 17 parallel zur Längsachse 9 des Kugelgewindetriebs verlaufen.

Der Abstand S 21.3 zwischen zwei benachbarten Umlenkkanälen ist kleiner als der Abstand S 21.1 am Anfang bzw. am Ende oder 21.3 am Anfang bzw. am Ende eines Umlenkkanals 17.

In Figur 5 sind exemplarisch zwei Kugeln 13 eingezeichnet. Diese Kugeln 13 ragen seitlich über die Umlenkkanäle 17 hinaus, da die Umlenkkanäle zwar einen kreisbogenförmigen Querschnitt haben, jedoch einen Umschlingungswinkel von weniger als 180° haben.

Dies bedeutet, dass sich beim Rücklauf der Kugeln 13 durch die Umlenkkanäle 17 die Kugeln benachbarter Umlenkkanäle 17 berühren und gegenseitig blockieren können, was zu einer Funktionsunfähigkeit des Kugelgewindetriebs führt. Wegen des verringerten Abstandes der Längsachsen 21 benachbarter Umlenkkanäle 17 ist die Gefahr von solchen gegenseitigen Blockierungen oder Berührungen in dem Verbindungsabschnitt 21.3 am größten.

In Figur 6 ist nun ein Ausführungsbeispiel einer erfindungsgemäßen Umlenkleiste dargestellt, bei dem der Abstand S zwischen den Längsachsen 21 der Umlenkkanäle 17 über die gesamte Länge der Umlenkkanäle 17 konstant ist. Dies wird dadurch erreicht, dass eine Verbindungslinie 31 zwischen den ersten Richtungsänderungen 23 einen Winkel β mit der Längsachse 9 einschließt.

In den Figuren 5 und 6 ist eine Abwicklung der an sich zylindrisch gekrümmten Umlenkkanäle 17 dargestellt. Deshalb stellt sich die Verbindungslinie 31 als gerade Linie dar. In der Wirklichkeit handelt es sich jedoch bei der Verbindungslinie 31 um eine schraubenförmige Linie, die immer im gleichen radialen Abstand zur Längsachse 9 verläuft. Die Steigung der schraubenförmigen Verbindungslinie 31 wird durch den Winkel β bestimmt.

Entsprechendes gilt auch für die Verbindungslinie 33 zwischen den zweiten Richtungsänderungen 25.

Wie man schon anschaulich aus der Figur 6 entnehmen kann, ist durch die Tatsache, dass die erste Richtungsänderung 23.2 des zweiten Umlenkkanals 17.2 etwas höher angeordnet ist als die erste Richtungsänderung 23.1 des ersten Umlenkkanals 17.1 die Dicke der Rippe 27 auch im Bereich in dem der Verbindungsabschnitt 21.1 genauso groß wie am Anfang und am Ende der Umlenkkanäle 17.

Entsprechendes gilt natürlich auch für die geknickten Längsachsen 21 der Umlenkkanäle 17. Aus Gründen der Übersichtlichkeit sind nicht alle Längsachsen und alle Bezugszeichen der Umlenkkanäle 17 und alle Bezugszeichen in der Figur 6 eingetragen.

Bei dem Ausführungsbeispiel gemäß Figur 6 ist der Abstand zwischen den Abschnitten 21.3 benachbarter Umlenkkanäle 17 genauso groß wie im Bereich der Abschnitte 21.1 und 21.2 der Längsachsen, so dass eine Kollision der Kugeln (nicht eingezeichnet in Figur 6) auch in dem Verbindungsbereich 21.3 ausgeschlossen werden kann.

Daher ist es durch die Verwendung erfindungsgemäßer Umlenkleisten 7 möglich, auch bei sehr speziellen Konstellationen von Gewindespindeldurchmesser, Steigung, sowie Kugeldurchmesser alle Gewindegänge der Kugelgewindespindel 3 mit Kugeln zu füllen und somit die Tragfähigkeit und Belastbarkeit des erfindungsgemäßen Kugelgewindetriebs 1 zu maximieren.

Dies wird durch die erfindungsgemäße "verdrehte" Anordnung der Richtungsänderungen 23 und 25 benachbarter Umlenkkanäle 17 erreicht.

Die dabei zu beachtenden geometrischen Zusammenhänge sind anhand der Figur 7 nochmals deutlich gemacht. Dabei sind die Längsachsen 23 zweier benachbarter Umlenkkanäle als strichpunktierte Linien angedeutet. Die erste Richtungsänderung 23.1 des ersten Umlenkkanals 17.1 ist mit 23.1 bezeichnet und entsprechend ist die erste Richtungsänderung des zweiten und damit benachbarten Umlenkkanals 17.2 mit dem Bezugszeichen 23.

Hierbei sind vier Größen von Bedeutung.

Mit dem Buchstaben d ist der Abstand zweier benachbarter der Längsachsenabschnitte 21.1, zweier benachbarter Umlenkkanäle 17 bezeichnet.

Im Bereich des Verbindungsabschnitts 21.3 der Längsachsen ist der Abstand zwischen zwei benachbarten Umlenkkanälen 17 mit dem Buchstaben "x" bezeichnet. Nun gibt es noch zwei Winkelgrößen, nämlich der Winkel β, welcher den Betrag der ersten Richtungsänderung in den Knickpunkten 23.1 bzw. 23.2 angibt. Eine weitere Winkelgröße ist der Winkel α, welcher den Winkel zwischen einer den zwei Verbindungspunkten 23 ... die Verbindungslinie 31 zwischen zwei ersten Richtungsänderungen 23.1 und 23.2 mit der Längsachse 9 des Kugelgewindetriebs 1 kennzeichnet. Die Winkel α und β sind aller Regel nicht gleich. Die Zusammenhänge zwischen den genannten Größen d, x, α und β sind in der Gleichung 1 am Ende der Figurenbeschreibung angegeben. Wenn man nun die Bedingung stellt, dass beispielsweise x=d sein sollte, dann lässt sich der Wickel α in Abhängigkeit des Winkels β oder umgekehrt angeben.

Somit ist quantitativ auch der Zusammenhang zwischen den genannten vier Größen in der Gleichung 1 dargestellt.

$$x/d = \cos\beta + \tan\alpha \times \sin\beta$$

## Patentansprüche

1. Umlenkleiste für einen Kugelgewindetrieb (1), wobei die Umlenkleiste (1) mehrere Umlenkkanäle (17) aufweist, und wobei die Umlenkkanäle (17) einen Anfang und ein Ende sowie eine Längsachse (21) aufweisen, wobei jeder Umlenkkanal (17) eine erste Richtungsänderung (23) und eine zweite Richtungsänderung (25) aufweist, **dadurch gekennzeichnet, dass** der Abstand (S) zwischen den Längsachsen (21) zweier benachbarter Umlenkkanäle (17.1, 17.2 ... 17.6) über die gesamte Länge der Umlenkkanäle (17.1, 17.2 ... 17.6) konstant ist, und somit eine Verbindungslinie (31) von den ersten Richtungsänderungen (23) verschiedener Umlenkkanäle (17) verdreht zu einer Längsachse (9) der Kugelgewindespindel (3) verläuft.

2. Umlenkleiste nach Anspruch 1, **dadurch gekennzeichnet, dass** Anfang und Ende jedes Umlenkkanals (17) versetzt zueinander sind, und dass ein Versatz (19) der Enden von der Steigung des Kugelgewindetriebs (1) anhängt.

3. Umlenkleiste nach Anspruch 2, **dadurch gekennzeichnet, dass** der Versatz (19) durch eine erste Richtungsänderung (23) und eine daran anschließende zweite komplementäre Richtungsänderung (25) der Umlenkkanäle (17) gebildet wird.

4. Umlenkleiste nach Anspruch 3, **dadurch gekennzeichnet, dass** die erste Richtungsänderung (23) und/oder die zweite komplementäre Richtungsänderung (25) als Knick oder als Kreisbogensegment der Längsachse (21) ausgebildet ist.

5. Umlenkleiste nach einem der vorhergehenden Ansprüche, **dadurch gekennzeichnet, dass** eine Verbindungslinie (31) zwischen den zweiten Richtungsänderungen (25) von verschiedenen Umlenkkanälen (17) verdreht zu einer Längsachse (9) der Kugelgewindespindel (3) verläuft.

6. Umlenkleiste nach Anspruch 4 oder 5, **dadurch gekennzeichnet, dass** eine Verbindungslinie zwischen den Mittelpunkten von kreisbogenförmigen ersten Richtungsänderungen (23) von verschiedenen Umlenkkanälen (17) verdreht zu einer Längsachse (9) der Kugelgewindespindel (3) verläuft.

7. Umlenkleiste nach einem der Ansprüche 4 bis 6, **dadurch gekennzeichnet, dass** eine Verbindungslinie (31) zwischen den Mittelpunkten von kreisbogenförmigen zweiten Richtungsänderungen (25) verschiedener Umlenkkanäle (17) verdreht zu einer Längsachse (9) der Kugelgewindespindel (3) verläuft.

8. Umlenkleiste nach einem der vorhergehenden Ansprüche, **dadurch gekennzeichnet, dass** zwischen der ersten Richtungsänderung (23) und der zweiten komplementären Richtungsänderung (25) der Umlenkkanäle (17) ein gerader Abschnitt (21.3) vorhanden ist.

9. Umlenkleiste nach einem der vorhergehenden Ansprüche, **dadurch gekennzeichnet, dass** die Umlenkkanäle (17) seitlich durch eine Rippe (27) begrenzt sind.

10. Kugelgewindetrieb (1) umfassend eine Kugelgewindespindel (3) und eine Kugelgewindemutter (5), wobei die Kugelgewindespindel (3) und die Kugelgewindemutter (5) einen Kugelaufkanal mit mehreren Gewindegängen (11) begrenzen in dem Kugeln (13) angeordnet sind, die sich auf der Kugelgewindespindel (3) und der Kugelgewindemutter (5) abwälzen, wenn die Kugelgewindemutter (3) relativ zu der Kugelgewindespindel (1) verdreht wird, dass in der Kugelgewindemutter (5) eine Umlenkleiste (7) angeordnet ist ist, welche die Kugeln (13) in den gleichen Gewindegang zurückführt umlenkt, **dadurch gekennzeichnet, dass** die Umlenkleiste (7) eine Umlenkleiste nach einem der vorhergehenden Ansprüche ist.

11. Kugelgewindetrieb (1) nach Anspruch 10, **dadurch gekennzeichnet, dass** in der Kugelgewindemutter (5) eine Längsnut vorhanden ist, und dass die Umlenkleiste (7) in der Längsnut angeordnet ist.

12. Kugelgewindetrieb (1) nach Anspruch 10 oder 11, **dadurch gekennzeichnet, dass** die Umlenkleiste (7) an der Kugelgewindemutter (5) befestigt und gegen Verschieben in axialer Richtung und/oder in tangentialer Richtung gesichert ist.

## Claims

1. Deflecting strip for a ball screw drive (1), wherein the deflecting strip (1) has several deflecting channels (17), and wherein the deflecting channels (17) have a beginning and an end as well as a longitudinal axis (21), wherein each deflecting channel (17) has a first change in direction (23) and a second change in direction (25), **characterised in that** the distance (S) between the longitudinal axes (21) of two adjacent deflecting channels (17.1, 17.2 ... 17.6) is constant over the entire length of the deflecting channels (17.1, 17.2 ... 17.6), and thus a connecting line (31) between the first changes in direction (23) of different deflecting channels (17) runs obliquely to a longitudinal axis (9) of the ball screw spindle (3).

2. Deflecting strip according to claim 1, **characterised in that** the beginning and end of each deflecting channel (17) are offset relative to one another, and that an offset (19) between the ends is related to the pitch of the ball screw drive (1).

3. Deflecting strip according to claim 2, **characterised in that** the offset (19) is formed through a first change in direction (23) and a subsequent second complementary change in direction (25) of the deflecting channels (17).

4. Deflecting strip according to claim 3, **characterised in that** the first change in direction (23) and/or the second complementary change in direction (25) is formed as a kink in, or circular arc segment departing from, the longitudinal axis (21).

5. Deflecting strip according to one of the preceding claims, **characterised in that** a connecting line (31) between the second changes in direction (25) of different deflecting channels (17) runs obliquely to a longitudinal axis (9) of the ball screw spindle (3).

6. Deflecting strip according to claim 4 or 5, **characterised in that** a connecting line between the centre points of circular arc-formed first changes in direction (23) of different deflecting channels (17) runs obliquely to a longitudinal axis (9) of the ball screw spindle (3).

7. Deflecting strip according to one of the claims 4 to 6, **characterised in that** a connecting line (31) between the centre points of circular arc-formed second changes in direction (25) of different deflecting channels (17) runs obliquely to a longitudinal axis (9) of the ball screw spindle (3).

8. Deflecting strip according to one of the preceding claims, **characterised in that** there is a straight section (21.3) between the first change in direction (23) and the second complementary change in direction (25) of the deflecting channels (17).

9. Deflecting strip according to one of the preceding claims, **characterised in that** the deflecting channels (17) are limited laterally by a rib (27).

10. Ball screw drive (1) comprising a ball screw spindle (3) and a ball screw nut (5), wherein the ball screw spindle (3) and the ball screw nut (5) delimit a ball channel with several thread turns (11) in which balls (13) are arranged which roll against the ball screw spindle (3) and the ball screw nut (5) when the ball screw nut (3) is rotated relative to the ball screw spindle (1), wherein a deflecting strip (7) is arranged in the ball screw nut (5) which deflects the balls (13) to return them into the same thread turn, **characterised in that** the deflecting strip (7) is a deflecting strip according to one of the preceding claims.

11. Ball screw drive (1) according to claim 10, **characterised in that** a longitudinal groove is present in the ball screw nut (5), and that the deflecting strip (7) is arranged in the longitudinal groove.

12. Ball screw drive (1) according to claim 10 or 11, **characterised in that** the deflecting strip (7) is fixed to the ball screw nut (5) and secured against being displaced in an axial direction and/or in a tangential direction.

**Revendications**

1. Bande de déviation pour une vis d'entraînement à billes (1), dans laquelle la bande de déviation (1) présente une pluralité de canaux de déviation (17), et dans laquelle les canaux de déviation (17) présentent un début et une fin, ainsi qu'un axe longitudinal (21), **caractérisée en ce que** la distance (S) entre les axes longitudinaux (21) de deux canaux de déviation (17.1, 17.2 ... 17.6) est constante sur ladite longueur des canaux de déviation (17.1, 17.2 ... 17.6), et par conséquent une ligne de liaison (31) s'étend depuis des premiers changements de direction de canaux de déviation (17) différents en tournant par rapport à un axe longitudinal (9) de la broche de vis d'entraînement à billes (3).

2. Bande de déviation selon la revendication 1, **caractérisée en ce que** le début et la fin de chaque canal de déviation (17) sont mutuellement décalés, et **en ce qu'**un décalage (19) des extrémités est lié à la pente de la vis d'entraînement à billes (1).

3. Bande de déviation selon la revendication 2, **caractérisée en ce que** le décalage (19) est réalisé par un premier changement de direction (23) et un second changement de direction complémentaire successif (25) du canal de déviation (17).

4. Bande de déviation selon la revendication 3, **caractérisée en ce que** le premier changement de direction (23) et/ou le second changement complémentaire (25) est réalisé sous la forme d'un coude, ou d'un segment d'arc de cercle de l'axe longitudinal (21).

5. Bande de déviation selon l'une quelconque des revendications précédentes, **caractérisée en ce qu'**une ligne de liaison (31) entre les seconds changements de direction (25) de différents canaux de déviation (17) s'étend en tournant par rapport à un axe longitudinal (9) de la broche de vis d'entraînement à billes (3).

6. Bande de déviation selon la revendication 4 ou 5, **caractérisée en ce qu'**une ligne de liaison entre les points médians de premiers changements de direction en forme d'arc de cercle (23) de canaux de déviation (17) différents s'étend en tournant par rapport à un axe longitudinal (9) de la broche de vis d'entraînement à billes (3).

7. Bande de déviation selon l'une quelconque des revendications 4 à 6, **caractérisée en ce qu'**une ligne de liaison (31) entre les points médians de seconds changements de direction en forme d'arc de cercle (25) de canaux de déviation (17) différents s'étend en tournant par rapport à un axe longitudinal (9) de la broche de vis d'entraînement à billes (3).

8. Bande de déviation selon l'une quelconque des revendications précédentes, **caractérisée en ce qu'**entre le premier changement de direction (23) et le second changement de direction complémentaire (25) des canaux de déviation (17), une partie rectiligne (21.3) est présente.

9. Bande de déviation selon l'une quelconque des revendications précédentes, **caractérisé en ce que** les canaux de déviation (17) sont délimités latéralement par une nervure (27).

10. Vis d'entraînement à billes (1) comprenant une broche de vis d'entraînement à billes (3) et un écrou de vis d'entraînement à billes (5), dans laquelle la broche de vis d'entraînement à billes (3) et l'écrou de vis d'entraînement à billes (5) définissent un canal de circulation de billes à plusieurs filets (11) dans lequel des billes (13) sont disposées, qui roulent sur la broche de vis d'entraînement à billes (3) et l'écrou de vis d'entraînement à billes (5) lorsque l'écrou de vis d'entraînement à billes (3) va être mis en rotation par rapport à la vis d'entraînement à billes (1), une bande de déviation (7) étant agencée dans l'écrou de vis d'entraînement à billes (5), qui dévie les billes (13) en arrière dans le même filet de vis, **caractérisé en ce que** la bande de déviation (7) est constituée d'une bande de déviation selon l'une quelconque des revendications précédentes.

11. Vis d'entraînement à billes (1) selon la revendication 10, **caractérisée en ce qu'**une rainure longitudinale est prévue dans l'écrou de vis d'entraînement à billes (5), et **en ce que** la bande de déviation (7) est disposée dans la rainure longitudinale.

12. Vis d'entraînement à billes (1) selon la revendication 10 ou 11, **caractérisée en ce que** la bande de déviation (7) peut être fixée sur l'écrou de vis d'entraînement à billes (5), pour offrir une sûreté à l'encontre d'un déplacement dans une direction axiale et/ ou dans une direction tangentielle.

1

3        7           5

**Fig. 1**

11.0  11.1      11.6          5

13                                      7        9

15.1

15.2

13            **Fig. 2**

17.3  17.5
17.1  17.2  17.4  17.6

7

19        **Fig. 3**

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0643241 A1
- EP 0113014 A

- GB 2361045 A